# EUROPÄISCHE PATENTSCHRIFT

(11) **EP 4 263 347 B1**
(45) Veröffentlichungstag und Bekanntmachung des Hinweises auf die Patenterteilung: **06.08.2025**
(21) Anmeldenummer: 21816369.9
(22) Anmeldetag: 18.11.2021
(51) Int. Cl.: G05B 19/042, G06F 3/16, G06Q 10/06, G06Q 10/20, G06Q 50/02, G06Q 50/06, H04L 41/0806, H04L 41/16

(54) **VERFAHREN UND MOBILE TRANSPORTEINHEIT ZUM DURCHFÜHREN EINER INBETRIEBNAHME EINES FELDGERÄTS ODER EINES SERVICEAUFTRAGS AN DEM FELDGERÄT IN EINER ANLAGE DER AUTOMATISIERUNGSTECHNIK**
METHOD AND MOBILE TRANSPORT UNIT FOR COMMISSIONING A FIELD DEVICE OR A SERVICE JOB ON THE FIELD DEVICE IN AN AUTOMATION ENGINEERING INSTALLATION
PROCÉDÉ ET UNITÉ DE TRANSPORT MOBILE POUR LA MISE EN SERVICE D'UN DISPOSITIF DE TERRAIN OU D'UNE TÂCHE DE SERVICE SUR LE DISPOSITIF DE TERRAIN DANS UNE INSTALLATION D'INGÉNIERIE D'AUTOMATISATION

(30) Priorität: 21.12.2020 DE 102020134444
(43) Veröffentlichungstag der Anmeldung: 25.10.2023
(73) Patentinhaber: Endress+Hauser Process Solutions AG, 4153 Reinach (CH)
(72) Erfinder: VOEGEL, Michael, 68220 Hagenthal le bas (FR); FRANKE, Alexander, 4127 Birsfelden (CH); GRINER, Stefan, 4415 Lausen (CH); WAGNER, Joachim, 79540 Lörrach (DE)
(74) Vertreter: Endress + Hauser Group Services (Deutschland) AG+Co. KG
(86) Internationale Anmeldenummer: PCT/EP2021/082176
(87) Internationale Veröffentlichungsnummer: WO 2022/135802

(56) Entgegenhaltungen:
- DE-A1- 102018 130 989
- US-A1- 2016 282 872

## Beschreibung

Die Erfindung betrifft ein Verfahren zum Durchführen einer Inbetriebnahme eines Feldgeräts oder eines Serviceauftrags an dem Feldgerät in einer Anlage der Automatisierungstechnik, wobei in der Anlage eine mobile Transporteinheit eingesetzt wird, wobei die mobile Transporteinheit eine Positionsbestimmungseinheit aufweist und zur Navigation in der Anlage ausgestaltet ist, und wobei die mobile Transporteinheit zumindest eine Ausgabeeinheit aufweist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensoreinheiten. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung), einem PLS (Prozessleitsystem) oder Cloud (Datenbank, welche über das Internet kontaktierbar ist). Die übergeordneten Einheiten dienen unter anderem zur Prozesssteuerung, Datenspeicherung und Datenauswertung, sowie zur Inbetriebnahme der Feldgeräte. Die von den Feldgeräten, insbesondere von den Sensoreinheiten, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand oder weitere Systeme der Anlage weiterleiten. Der Leitstand und die weiteren Systeme dienen zur Prozessvisualisierung, Prozessüberwachung, Prozessoptimierung, Wartung, Datenanalyse und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

DE102018130989A1 offenbart ein System, das mindestens ein Feldgerät überwacht oder betreibt, das zur Bestimmung oder Überwachung physikalischer oder chemischer Prozessgrößen in der Automatisierungstechnik eingesetzt wird.

US20160282872A1 beschreibt ein System und ein Verfahren zur Überwachung einer Industrieanlage mit Hilfe eines mit Sensoren ausgestatteten autonomen Fahrzeugs.

Im Zuge der fortschreitenden Digitalisierung hinsichtlich der Schlagworte "Internet of Things (IoT)" und "Industrie 4.0", welche auch vor Komponenten von Prozessanlagen nicht Halt macht, besteht ein erhöhter Bedarf, Daten von Feldgeräte, insbesondere Messdaten, Diagnosedaten, Parameterwerte, etc. an zentraler Stelle verfügbar zu machen und aus diesen Daten einen Mehrwert zu schaffen (Schlagworte hierfür sind "Big Data Analysis", "Predictive Maintenance", etc.). Unter der zentralen Stelle wird häufig eine über das Internet kontaktierbare Plattform, insbesondere eine sogenannte cloudbasierte Plattform, verstanden.

Trotz der fortschreitenden Digitalisierung ist es notwendig, dass Servicepersonal die Feldgeräte zum Zwecke der Inbetriebnahme und/oder Wartungs- und Servicearbeiten physisch aufsucht und entsprechende Handlungen und Bedienaktionen am Feldgerät vornimmt. Jedoch ist immer weniger Servicepersonal im Einsatz. Die Servicekräfte sind heutzutage zudem weniger spezialisiert, was an der Tatsache liegt, dass das Feldgeräteportfolio der diversen Feldgerätehersteller immer größer wird. Die Komplexität der von dem Servicepersonal durchzuführenden Tätigkeiten wird immer höher, z. B. die Instandhaltung der Produktionsanlagen in gutem Zustand und die Antizipation und die Vorbereitung auf zukünftige Arbeiten.

Darüber hinaus arbeitet ein Servicetechniker in der Regel allein, was unter Umständen einen hohen Zeitaufwand erfordert und Sicherheitsprobleme aufwirft. Die täglichen Aktivitäten, die der Servicetechniker ausführen muss, sind sehr anspruchsvoll - Unterstützung durch einen zweiten Servicetechniker wäre sehr willkommen und würde die Einsatzzeit verringern und damit ggf. die Anlagenverfügbarkeit erhöhen. Zum Beispiel beim Verstehen der Diagnose, die ein Feldgerät liefert, beim Vorschlagen von Abhilfemaßnahmen und bei der Planung des Eingriffs in das Produktionsprogramm.

Auch könnte ein Servicetechniker eine körperliche Beeinträchtigung haben, die bestimmte Tätigkeiten im Feld einschränken oder verhindern kann.

Ausgehend von dieser Problematik liegt der Erfindung die Aufgabe zugrunde, die Effizienz eines Bedieners bei der Inbetriebnahme eines Feldgeräts und der Lösung von Serviceaufträgen an einem Feldgerät zu steigern und die Fehleranfälligkeit zu verringern.

Die Aufgabe wird durch ein Verfahren gemäß dem Anspruch 1 gelöst.

Der Vorteil des erfindungsgemäßen Verfahrens besteht darin, dass ein Bediener während des Durchführens von Bedienaktionen an einem Feldgerät von einer mobilen Transporteinheit unterstützt wird. Die mobile Transporteinheit führt den Bediener hierfür in einem ersten Schritt durch die Anlage zu dem entsprechenden Feldgerät. In einem zweiten Schritt folgt das eigentliche Assistieren, bei welchem dem Bediener die durchzuführenden Handlungen erläutert werden. Fehler bei der Durchführung der Bedienaktionen können so reduziert werden.

Bei dem Bediener handelt es sich beispielsweise um einen Mitarbeiter des Servicepersonals der Anlage oder des Feldgeräteherstellers, insbesondere ein Servicetechniker.

Bei den auszuführenden Handlungen, bzw. Aktionen, handelt es sich sowohl um physische Handlungen, beispielsweise dem Verbinden von Kabeln, Arbeiten an Hardwarekomponenten des Feldgeräts oder dessen Messumgebung (Flansche, Rohrleitungen, Befestigungen, etc.), als auch um softwareseitige Bedienungen, beispielsweise dem Parametrieren eines Feldgerät.

Feldgeräte, welche im Zusammenhang mit dem erfindungsgemäßen Verfahren genannt werden, sind bereits im einleitenden Teil der Beschreibung beispielhaft beschrieben worden. Im Falle, dass das Feldgerät zum Erfassen von zumindest einer physikalischen, chemischen oder sonstigen Größe im Prozess ausgestaltet ist, weist das Feldgerät eine Sensoreinheit auf, welche zum Erfassen der Größe, beispielsweise einem Temperaturwert, einem Druck, einer Dichte, etc. dient. Im Falle, dass das Feldgerät zum Beeinflussen von Größen eines verfahrenstechnischen Prozesses ausgestaltet ist, weist das Feldgerät eine Aktoreinheit auf, beispielsweise ein Ventil, welche zum Beeinflussen der Größen des verfahrenstechnischen Prozesses, beispielsweise dem Einstellen eines Durchflusswerts, dient.

Gemäß einer vorteilhaften Ausgestaltung des erfindungsgemäßen Verfahrens ist vorgesehen, dass die mobile Transporteinheit im Zuge des Assistierens eine drahtlose erste Kommunikationsverbindung aufbaut und Daten, insbesondere Parameter- oder Konfigurationseinstellungen, einen Gerätestatus oder Messwerte, über die erste Kommunikationsverbindung aus dem Feldgerät ausliest, wobei das Vorgeben und/oder Erläutern der auszuführenden Handlungen, bzw. Aktionen, an die ausgelesenen Daten angepasst wird. Die drahtlose erste Kommunikationsverbindung basiert hierfür beispielsweise auf Bluetooth, insbesondere Bluetooth LE, WiFi oder Wireless HART. Für viele der durchzuführenden Handlungen, bzw. Aktionen, werden Daten der Feldgeräte benötigt. Beispielsweise muss, falls an einem Feldgerät ein Fehlerfall auftritt, die genaue Fehlerursache bestimmt werden, wofür spezielle Diagnosemeldungen und/oder bestimmte Parameterwerte herangezogen werden.

Gemäß einer vorteilhaften Ausgestaltung des erfindungsgemäßen Verfahrens ist vorgesehen, dass die mobile Transporteinheit zumindest zeitweise in einer zweiten Kommunikationsverbindung über das Internet mit einer cloudbasierten Plattform steht, wobei die Inbetriebnahmenotifikation, bzw. die Servicenotifikation, über die zweite Kommunikationsverbindung von der cloudbasierten Plattform an die mobile Transporteinheit übermittelt wird. Die zweite Kommunikationsverbindung wird beispielsweise über ein Mobilfunknetz oder per WiFi etabliert. Die mobile Transporteinheit weist hierfür die notwendige Hard- und Software auf, sowie gegebenenfalls eine SIM-Karte. Des Weiteren verfügt die mobile Transporteinheit über die entsprechenden Informationen, um die cloudbasierte Plattform zu kontaktieren und sich gegebenenfalls authentifizieren/autorisieren zu können. Zum Übermitteln der Inbetriebnahmenotifikation, bzw. der Servicenotifikation wird die mobile Transporteinheit vorab in der cloudbasierten Plattform registriert.

Alternativ kann der zweite Kommunikationskanal auch über das Kommunikationsnetzwerk etabliert werden (bspw. über ein in dem Kommunikationsnetzwerk eingesetztes Gateway, an welches die mobile Transporteinheit Daten drahtlos überträgt, bzw. von diesem empfängt), in welches das Feldgerät eingebunden ist und seine erhobenen Messwerte an eine Leitstelle der Anlage übermittelt. Bei diesem Kommunikationsnetzwerk kann es sich, wie eingangs beschrieben, um einen Feldbus der Automatisierungstechnik handeln. In diesem Kommunikationsnetzwerk ist dann ein sogenanntes Edge Device eingesetzt, welches Daten aus diesem Kommunikationsnetzwerk (also auch die Daten der mobilen Transporteinheit) an die cloudbasierte Plattform per Internet übermittelt, bzw. Daten von dieser cloudbasierten Plattform empfängt.

Als "cloudbasierte Plattform" wird ein für einen Bediener, die Feldgeräte und/oder die mobile Transporteinheit per Internet oder lokalem Netzwerk kontaktierbarer Server bezeichnet, auf dem eine oder mehrere Applikationen ausgeführt werden, welche das Erstellen und Übermitteln der Inbetriebnahmenotifikation, bzw. der Servicenotifikation an die mobile Transporteinheit ermöglichen.

Gemäß einer vorteilhaften Ausgestaltung des erfindungsgemäßen Verfahrens ist vorgesehen, dass die mobile Transporteinheit, im Falle, dass die zweite Kommunikationsverbindung an der aktuellen Ortsposition der mobilen Transporteinheit nicht etabliert werden kann, zu einer definierten Ortsposition in der Anlage navigiert, an welcher definierten Ortsposition die zweite Kommunikationsverbindung etablierbar ist, wobei die mobile Transporteinheit die zweite Kommunikationsverbindung nach dem Navigieren an die definierte Ortsposition etabliert, und wobei die mobile Transporteinheit an die cloudbasierte Plattform zu übermittelnde Daten und/oder die von der cloudbasierten Plattform übermittelte Inbetriebnahmenotifikation, bzw. Servicenotifikation, vor, bzw. nach dem Etablieren der Kommunikationsverbindung an der definierten Ortsposition zwischenspeichert. Je nach Position in der Anlage kann die zweite Kommunikationsverbindung nicht etabliert werden, falls beispielsweise WiFi-Router außerhalb der Reichweite der mobilen Transporteinheit sind oder falls die Struktur der Anlage, beispielsweise ein abschirmendes Metalldach, keine Verbindung zu einem Mobilfunknetz zulässt. Die definierte Ortsposition stellt einen Ort innerhalb (oder gegebenenfalls außerhalb) der Anlage dar, an welchem die entsprechende Infrastruktur zum Aufbau der zweiten Kommunikationsverbindung vorhanden ist, beispielsweise ein WiFi-Router. Die definierte Ortsposition weiterhin auch zum Aufladen der mobilen Transporteinheit verwendet werden und hierfür erforderliche technische Infrastruktur aufweisen.

Gemäß einer nicht beanspruchten Weiterbildung des erfindungsgemäßen Verfahren ist vorgesehen, dass die mobile Transporteinheit eine Kameraeinheit aufweist und wobei die mobile Transporteinheit während des Führens des Bedieners zu der Einbauposition des Feldgeräts den Bediener beobachtet und die Geschwindigkeit während des Navigierens an die Geschwindigkeit des Bedieners anpasst. Es ist hierbei vorgesehen, dass sich die mobile Transporteinheit vor dem Bediener bewegt und der Bediener der mobilen Transporteinheit folgt. Die mobile Transporteinheit ermittelt vorab die Route zu dem Feldgerät, beispielsweise mittels GPS oder mittels eines Anlagenplans. Es ist insbesondere vorgesehen, dass der Abstand zu dem Bediener nicht größer als ein vorbestimmter Wert ist. Bemerkt die mobile Transporteinheit, dass der Bediener Mühe hat zu folgen, so reduziert die mobile Transporteinheit ihre Geschwindigkeit entsprechend, bzw. erhöht ihre Geschwindigkeit, falls sich der Bediener zu nah befindet.

Gemäß einer nicht beanspruchten Ausgestaltung des erfindungsgemäßen Verfahrens ist vorgesehen, dass die mobile Transporteinheit den Bediener während des Navigierens auf bewegliche und/oder stationäre Hindernisse mittels der Ausgabeeinheit hinweist, wobei die mobile Transporteinheit die beweglichen, bzw. stationären Hindernisse mittels der Kameraeinheit erfasst und erkennt und/oder wobei die stationären Hindernisse der mobilen Transporteinheit vorab bekannt gemacht wurden, beispielsweise mittels eines auf der mobilen Transporteinheit gespeicherten Anlagenplans. Der Hinweis kann je nach Ausgestaltung der Ausgabeeinheit visuell und/oder akustisch erfolgen. Bei den stationären Hindernissen handelt es sich um unbewegliche, an festen Ortspositionen in der Anlage befindliche Hindernisse, beispielsweise um Wände oder Anlagenkomponenten (bspw. Behälter oder Rohrleitungen). Bei den beweglichen Hindernissen handelt es sich um temporär an einem Ort befindliche Hindernisse (bspw. Lieferungen wie Paletten oder Kartons, etc.) oder um ständig ihre Ortsposition ändernde Hindernisse (bspw. Menschen, weitere mobile Transporteinheiten, etc.).

Gemäß einer vorteilhaften Ausgestaltung des erfindungsgemäßen Verfahrens ist vorgesehen, dass als Ausgabeeinheit ein Display oder ein Projektor verwendet wird, wobei für das Vorgeben und/oder Erläutern der auszuführenden Handlungen, bzw. Aktionen, Installationsinformationen und/oder Produktinformation des Feldgeräts visualisiert werden. Beispielsweise werden Videos visualisiert, welche die vorzunehmenden auszuführenden Handlungen, bzw. Aktionen, anzeigen oder Gerätedokumentationen angezeigt.

Gemäß einer vorteilhaften Ausgestaltung des erfindungsgemäßen Verfahrens ist vorgesehen, dass als Ausgabeeinheit ein akustisches Wiedergabemittel, insbesondere ein Lautsprecher verwendet wird, wobei das Vorgeben und/oder Erläutern der auszuführenden Handlungen, bzw. Aktionen, mittels Sprachausgabe erfolgt. Die Sprachausgabe erfolgt beispielsweise anhand vorab aufgenommenen Sprachaufnahmen, oder wird von der mobilen Transporteinheit generiert, beispielsweise eine künstliche Stimme basierend auf "Text-to-Speech".

Gemäß einer vorteilhaften Ausgestaltung des erfindungsgemäßen Verfahrens ist vorgesehen, dass die für die Sprachausgabe verwendete künstliche Stimme je nach Kritikalität der auszuführenden Handlung, bzw. Aktion variiert, insbesondere bezüglich der Lautstärke, der Stimmfarbe und/oder der Sprechgeschwindigkeit.

Gemäß einer nicht beanspruchten Ausgestaltung des erfindungsgemäßen Verfahrens ist vorgesehen, dass die mobile Transporteinheit eine zusätzliche Ausgabeeinheit in Form eines Laserpointers aufweist, wobei die mobile Transporteinheit mittels der zusätzlichen Ausgabeeinheit während des Vorgebens und/oder Erläuterns der auszuführenden Handlungen, bzw. Aktionen, auf für das Ausführen der Handlungen, bzw. Aktionen wichtige Stellen, bzw. Komponenten des Feldgeräts und/oder der Anlage zeigt. Dies ist insbesondere für physisch durchzuführende Handlungen, bzw. Aktionen, vorgesehen.

Gemäß einer vorteilhaften Ausgestaltung des erfindungsgemäßen Verfahrens ist vorgesehen, dass der Bediener im Zuge des Assistierens Fragen an die mobile Transporteinheit bezüglich der auszuführenden Handlungen, bzw. Aktionen stellt und wobei die mobile Transporteinheit dem Bediener mittels der Ausgabeeinheit abhängig von den Fragen weitere Informationen bezüglich der auszuführenden Handlungen, bzw. Aktionen ausgibt. Die Antworten können je nach Ausgabeeinheit in Textform oder per Sprachausgabe ausgegeben werden.

Gemäß einer ersten Variante des erfindungsgemäßen Verfahrens ist vorgesehen, dass die mobile Transporteinheit eine Eingabeeinheit, insbesondere eine Mikrofoneinheit oder ein Touchdisplay, zum Eingeben der Fragen aufweist, wobei die mobile Transporteinheit die Fragen mittels eine Kl-Algorithmus oder mittels zusätzlichen, insbesondere von dem Feldgerät und/oder von der cloudbasierten Plattform abgefragten, Daten analysiert, und wobei die mobile Transporteinheit mittels des Kl-Algorithmus, bzw. der zusätzlichen Daten die weiteren Informationen erstellt.

Gemäß einer zweiten Variante des erfindungsgemäßen Verfahrens ist vorgesehen, dass die mobile Transporteinheit eine Eingabeeinheit, insbesondere eine Mikrofoneinheit oder ein Touchdisplay, zum Eingeben der Fragen aufweist, und wobei die mobile Transporteinheit die Fragen mittels der zweiten Kommunikationsverbindung an die cloudbasierte Plattform übermittelt, wobei die cloudbasierte Plattform die Fragen mittels eines Kl-Algorithmus oder zusätzlichen, insbesondere auf der cloudbasierten Plattform gespeicherten und/oder von dem Feldgerät abgefragten, Daten analysiert, wobei die die cloudbasierte Plattform mittels des Kl-Algorithmus, bzw. der zusätzlichen Daten die weiteren Informationen erstellt, und wobei die cloudbasierte Plattform die weiteren Informationen über die zweite Kommunikationsverbindung an die mobile Transporteinheit übermittelt.

Für beide Varianten kann auch vorgesehen sein, dass die Eingabeeinheit nicht Teil des mobilen Transportmittels ist, sondern Teil einer mobilen Bedieneinheit, insbesondere ein Tablet oder ein Smartphone, welche eine Bedienapplikation für die mobile Transporteinheit aufweist und welche die Fragen mittels einer dritten drahtlosen Kommunikationsverbindung an die mobile Transporteinheit übermittelt, bzw. welche Bedienapplikation den Kl-Algorithmus aufweist und die Analyse der Fragen und das Erstellen der weiteren Informationen durchführt, bzw. welche Bedienapplikation die Fragen an die cloudbasierte Plattform übermittelt und die weiteren Informationen von der cloudbasierten Plattform empfängt dem Bediener angibt und/oder an die mobile Transporteinheit übermittelt.

Der Kl-Algorithmus kann in beiden Fällen beispielsweise als neuronales Netzwerk ausgestaltet sein oder auf Deep Learning, bzw. einer ähnlich geeigneten Methode basieren und vorab mittels Trainingsdaten, betreffend konkreten Handlungen für die entsprechenden Applikationen und entsprechender Text- und/oder Spracherkennung eingelernt werden.

Eine vorteilhafte Weiterbildung des erfindungsgemäßen Verfahrens sieht vor, dass die Inbetriebnahmenotifikation, bzw. die Servicenotifikation, eine Information über zumindest ein für das Ausführen der Handlungen und/oder Aktionen benötigtes Hilfsmittel, insbesondere ein Werkzeug, ein Ersatzteil oder ein Sicherheitsmittel, enthält.

Beispiele für Werkzeuge sind:
- Schraubendreher,
- Löt- oder Schweißgeräte,
- Zangen, Klemmen, Saitenschneider, etc., oder
- elektronische Geräte, beispielsweise Bedieneinheiten zur Verbindung mit einem Feldgerät.

Beispiele für Ersatzteile sind:
- Elektronikelemente,
- Sensorelemente, oder
- Befestigungsmittel wie Schrauben, Bolzen, Drähte, etc.

Beispiele für Sicherheitsmittel sind:
- Handschuhe,
- Schutzbrillen, oder
- Schutzhelme.

Gemäß einer vorteilhaften Ausgestaltung des erfindungsgemäßen Verfahrens ist vorgesehen, dass die mobile Transporteinheit nach dem Empfang der Inbetriebnahmenotifikation, bzw. die Servicenotifikation und vor dem Schritt des Führens des Bedieners zu der Einbauposition des Feldgeräts zu einer Lagerstelle navigiert und das Hilfsmittel von dort abholt und mit sich führt. Insbesondere kann es sich bei der Lagerstelle um den definierten Ort in der Anlage handeln, an welchem die zweite Kommunikationsverbindung etablierbar ist und/oder an welchem die mobile Transporteinheit geladen werden kann.

Gemäß einer vorteilhaften Ausgestaltung des erfindungsgemäßen Verfahrens ist vorgesehen, dass die mobile Transporteinheit eine Kameraeinheit aufweist, wobei die Transporteinheit mittels der Kameraeinheit überprüft, ob der Bediener das benötigte Hilfsmittel mit sich führt, und wobei in dem Falle, dass der Bediener das benötigte Hilfsmittel nicht mit sich führt, die mobile Transporteinheit dem Bediener das Hilfsmittel übergibt und insbesondere vor dem Übergeben zu einer Lagerstelle navigiert und das Hilfsmittel von dort abholt. Die Bilderkennung kann hierbei ebenfalls mithilfe einen Kl-Algorithmus durchgeführt werden.

Gemäß einer vorteilhaften Ausgestaltung des erfindungsgemäßen Verfahrens ist vorgesehen, dass die Inbetriebnahmenotifikation, bzw. die Servicenotifikation eine Information über die korrekte Benutzung des Hilfsmittels enthält, wobei die mobile Transporteinheit mittels der Kameraeinheit überprüft, ob das Hilfsmittel von dem Bediener korrekt eingesetzt wird, und wobei in dem Falle, dass der Bediener das Werkzeug nicht oder nicht korrekt einsetzt, die mobile Transporteinheit den Bediener über die korrekte Anwendung des Hilfsmittels mittels der Ausgabeeinheit informiert. Die Bilderkennung kann hierbei ebenfalls mithilfe einen Kl-Algorithmus durchgeführt werden. Der Hinweis kann je nach Ausgabeeinheit in Textform oder per Sprachausgabe ausgegeben werden.

Gemäß einer vorteilhaften Ausgestaltung des erfindungsgemäßen Verfahrens ist vorgesehen, dass die mobile Transporteinheit eine Kameraeinheit aufweist, wobei die mobile Transporteinheit den Bediener während des Durchführens der Bedienaktion mittels der Kameraeinheit beobachtet und im Falle eines nicht korrekten Ausführens von Handlungen, bzw. Aktionen, den Bediener mittels der Ausgabeeinheit über das nicht korrekte Ausführen informiert.

Alternativ kann vorgesehen sein, dass die mobile Transporteinheit eine Kameraeinheit aufweist, wobei die mobile Transporteinheit den Bediener während des Durchführens der Bedienaktion mittels der Kameraeinheit beobachtet oder das Ergebnis der Bedienaktion überprüft und die korrekte Durchführung mittels der Ausgabeeinheit bestätigt.

In beiden Fällen kann Bilderkennung ebenfalls mithilfe einen Kl-Algorithmus durchgeführt werden. Die Information und/oder die Bestätigung kann je nach Ausgabeeinheit in Textform oder per Sprachausgabe ausgegeben werden. Hierdurch wird die Sicherheit erhöht und die korrekte Durchführung der Handlungen, bzw. Bedienaktionen sichergestellt.

Gemäß einer vorteilhaften Ausgestaltung des erfindungsgemäßen Verfahrens ist vorgesehen, dass die mobile Transporteinheit im Zuge des Assistierens zumindest eine Handlung, bzw. Aktion durchführt und wobei der Bediener zur Bestätigung jeder erfolgten Durchführung aufgefordert wird. Insbesondere ist dies in Situationen vorteilhaft, in welchen das Feldgerät an einer für den Bediener nur schlecht erreichbaren Stelle eingebaut ist, beispielsweise in großer Höhe oder einer engen Umgebung, oder in denen der Bediener keine Bedieneinheit mit sich trägt. So kann die die mobile Transporteinheit beispielsweise per Funk mit dem Feldgerät verbinden und beispielsweise eine Parametrierung durchführen oder eine physische Handlung an dem Feldgerät vornehmen, beispielsweise der Austausch einer Komponente des Feldgeräts durch ein Ersatzteil. Durch die Bestätigung des Bedieners wird der Sicherheitsgrad erhöht, so dass beispielsweise keine falschen Parameterwerte in das Feldgerät geschrieben werden.

Gemäß einer vorteilhaften Ausgestaltung des erfindungsgemäßen Verfahrens ist vorgesehen, dass im Falle, dass die Bestätigung nicht erfolgt, die entsprechende Handlung, bzw. Aktion, rückgängig gemacht wird. Der Bediener kann die Bestätigung aktiv verweigern. Alternativ kann vorgesehen sein, eine vorbestimmte Zeitspanne auf eine Bestätigung zu warten und bei Nichtbestätigung nach Ablauf der Zeitspanne die entsprechende Handlung, bzw. Aktion, rückgängig zu machen.

Des Weiteren wird die Aufgabe durch eine mobile Transporteinheit gemäß dem Anspruch 12 gelöst.

Gemäß einer vorteilhaften Ausgestaltung der erfindungsgemäßen mobilen Transporteinheit wird eine flugfähige Drohne, insbesondere eine Rotationsdrohne, oder ein Fahrerloses Transportfahrzeug eingesetzt. Eine Rotationsdrohne weist einen oder mehrere Rotoren auf. Beispiele für Rotationsdrohnen sind Single-Rotor-Drohnen, Tricopter, Quadcopter, Hexacopter oder Octocopter.

Ein Fahrerloses Transportfahrzeug (englisch "Automated Guided Vehicle", kurz AGV) ist ein flurgebundenes Fördermittel mit eigenem Fahrantrieb, das automatisch gesteuert und berührungslos geführt wird. Es können, je nach Typ der Anlage und Applikation des Feldgeräts, auch weitere Typen von mobilen Transporteinheiten eingesetzt werden, beispielsweise schwimm- und/oder tauchfähige Drohnen für Unterwasserapplikationen.

Die Erfindung wird anhand der nachfolgenden Figuren näher erläutert. Es zeigen
Fig. 1: ein Beispiel zum Ausführen des ersten Verfahrensschritts des erfindungsgemäßen Verfahrens; und
Fig. 2: mehrere Beispiele zum Ausführen des zweiten Verfahrensschritts des erfindungsgemäßen Verfahrens.

Das erfindungsgemäße Verfahren besteht aus zwei wesentlichen Verfahrensschritten: 1). Dem Führen eines Bedieners BN mittels einer mobilen Transporteinheit MT zu einem Feldgerät FG, an dem eine Bedienaktion ausgeführt werden soll, und
2.) dem Assistieren des Bedieners BN mittels der mobilen Transporteinheit MT während des Durchführens der Bedienaktion.

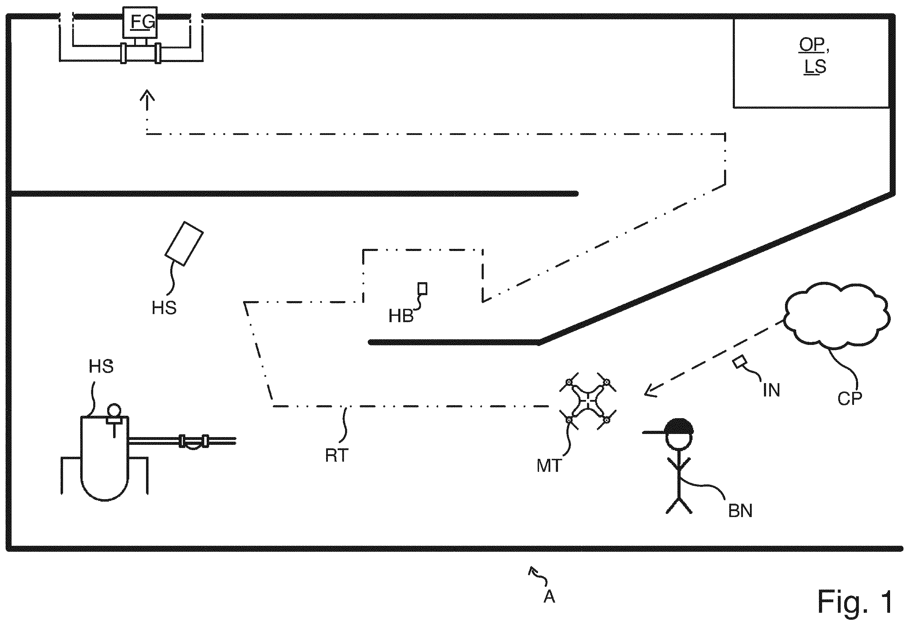

Fig. 1 skizziert den ersten Verfahrensschritt beispielhaft. In einer Anlage A ist ein Feldgerät FG in Gestalt eines Durchflussmessgeräts eingebaut. An dem Feldgerät FG tritt während des Betriebs ein Fehlerfall auf - die gemessenen Werte des Durchflusses liegen außerhalb eines erlaubten Bereichs, das Feldgerät FG liefert die Fehlermeldung "out of spec". Da Messungen mit einem sekundären Durchflussmessgerät keine Abweichung zeigen und sich der Prozess ansonsten auch unauffällig verhält, liegt der Fehler am Feldgerät FG selbst. In der Leitwarte wird daraufhin in einer Anwendung einer cloudbasierten Plattform CP eine Servicenotifikation IN erstellt. Um den Servicefall schnellstmöglich zu beheben, wird ein Bediener BN, konkret ein Mitarbeiter des Servicepersonals, in die Anlage A gesendet.

Die Anlage A weist eine Vielzahl verschiedener Messstellen mit jeweils einer Vielzahl von Feldgeräten auf. Für einen Bediener BN, der mit der Anlage A nicht vertraut ist, ist es eine zeitaufwendige Prozedur, mittels eines Anlagenplans das auszusuchende Feldgerät FG zu identifizieren, zu lokalisieren und aufzusuchen. Dem Bediener BN wird aus diesem Grund ein mobiles Transportmittel MT in Gestalt einer Rotationsdrohne zu Verfügung gestellt. Über eine Kommunikationsverbindung, beispielsweise etabliert per Mobilfunknetz, wird die Servicenotifikation IN von der cloudbasierten Plattform CP an die mobile Transporteinheit MT übermittelt. Die Servicenotifikation IN enthält die Identifikation des betreffenden Feldgeräts FG, sowie zumindest eine an dem Feldgerät FG vorzunehmende Bedienaktion, bzw. eine Information über diese, um den Fehlerfall am Feldgerät FG beheben zu können.

Anhand der Identifikation des Feldgeräts FG ermittelt die mobile Transporteinheit die Ortsposition des Feldgeräts FG, bzw. dessen Einbauposition in der Anlage A. Hierfür ist in der mobilen Transporteinheit MT ein Anlagenplan gespeichert, welcher die Ortsposition aller Feldgeräte in der Anlage A beinhaltet. Sollte der Anlagenplan nicht aktuell sein, oder das Feldgerät FG noch nicht vorhanden sein (beispielsweise, falls diese noch in Betrieb zu nehmen ist) so ruft die mobile Transporteinheit MT die Ortsposition des Feldgeräts FG von der cloudbasierten Plattform ab. Alternativ kann die Ortsposition des Feldgeräts FG auch in der Serviceidentifikation enthalten sein.

Mittels einer Positionsbestimmungseinheit, insbesondere eines GPS-Systems, bestimmt die mobile Transporteinheit MT ihre aktuelle Ortsposition und erstellt mithilfe des Anlagenplans eine Route RT zu dem Feldgerät FG. Der Anlagenplan weist weiterhin Ortspositionen und Dimensionen von stationären Hindernissen HS, HS' auf, in diesem Beispiel ein Schaltschrank als stationäres Hindernis HS eine Messstelle mit einem Tank und einer Rohrleitung als stationäres Hindernis HS'. Die Route RT wird derart geplant, dass die Route RT mit ausreichend großem Abstand an den stationären Hindernissen HS, HS' vorbeiführt.

Nach dem Erstellen der Route RT beginnt, insbesondere nach einem Bestätigen des Bedieners BN, die Navigation der mobilen Transporteinheit MT durch die Anlage A entlang der Route RT. Zum Navigieren verwendet die mobile Transporteinheit die Positionsbestimmungseinheit und eine oder mehrere eingebaute Kameraeinheiten KA. Die mobile Transporteinheit MT navigiert autonom entlang der Route RT durch die Anlage, wobei der Bediener BN der mobilen Transporteinheit folgt. Mittels der Kameraeinheit KA überprüft die mobile Transporteinheit MT erstens, ob der Bediener BN noch folgt, bzw. dass der Abstand zum Bediener nicht BN nicht zu groß wird, und passt die Navigationsgeschwindigkeit entsprechend an.

Zweitens wird der vor der mobilen Transporteinheit liegende Weg, bzw. die Umgebung auf weitere Hindernisse HB, HS, HS' gescannt. Insbesondere wird der Weg, bzw. die Umgebung hinsichtlich weiteren stationären Hindernissen HS, HS', gescannt beispielsweise Kabelkanäle, Schwellen, gespannte Kabel, Paletten, etc., die insbesondere im Dunkeln schwer für den Bediener zu erkennen sind und zu Verletzungen führen könnten. Ebenso wird hinsichtlich beweglicher Hindernisse HB gescannt, beispielsweise weiteres Personal in der Anlage oder weiteren mobilen Transporteinheiten. Bei Detektieren eines weiteren Hindernisses HS, HS', HB wird der Bediener BN mittels einer Ausgabeeinheit AE, AE', AE" der mobilen Transporteinheit MT, insbesondere per Sprachausgabe, auf das Hindernis HS, HS', HB aufmerksam gemacht. Des Weiteren wird die Route RT dementsprechend angepasst, dass das Hindernis HS, HS', HB umgangen wird.

Die Navigation endet bei Erreichen des Feldgeräts FG. Anschließend assistiert die mobile Transporteinheit den Bediener BN bei dem Durchführen der Bedienaktion zum Beheben des Fehlerfalls.

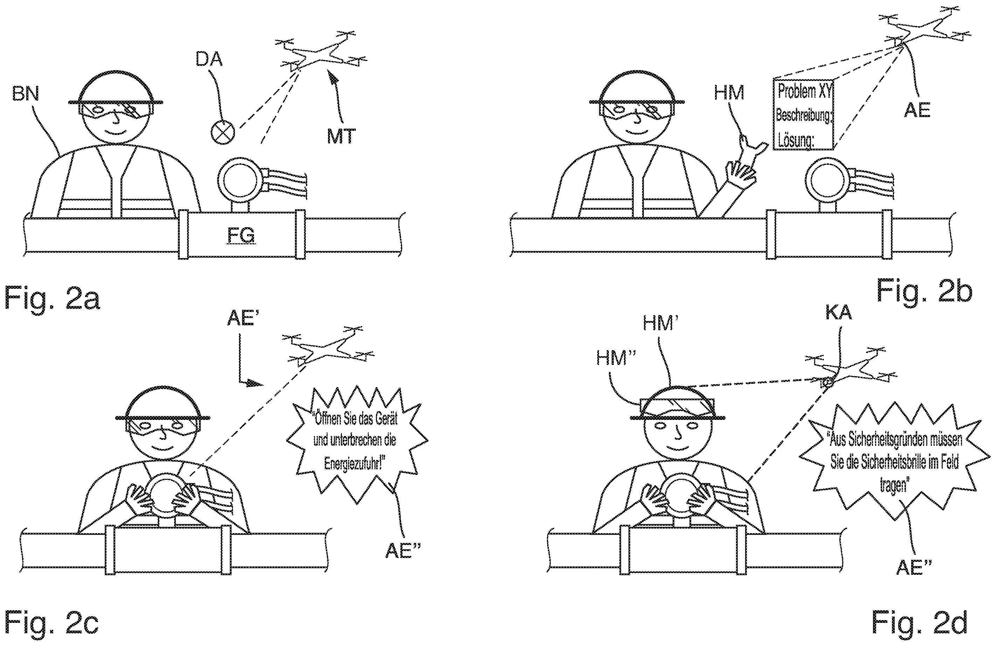

Fig. 2 zeigt mehrere Beispiele, wie die mobile Transporteinheit MT dem Bediener BN bei dem Durchführen der Bedienaktion assistieren kann. Die folgende Aufzählung ist nicht erschöpflich, so dass die Erfindung eine Vielzahl weiterer Assistiervorgänge umfasst.

### a) Abfragen weiterer Daten DA von dem Feldgerät FG:

Um den Bediener BN bestmöglich bei der Durchführung der Bedienaktion zu unterstützen, werden unter Umständen weitere Daten DA des Feldgeräts FG benötigt, welche in der Servicenotifikation IN nicht enthalten sind, insbesondere Parameter- oder Konfigurationseinstellungen, einen Gerätestatus oder Messwerte. Zu diesem Zweck etabliert die mobile Transporteinheit MT eine drahtlose Kommunikationsverbindung zu dem Feldgerät FG und liest die entsprechenden Daten DA aus. Es kann hierfür vorgesehen sein, dass sich die mobile Transporteinheit MT gegenüber dem Feldgerät FG authentifizieren muss. Hierfür wird der Bediener BN um die Eingabe von Logindaten oder eines biometrischen Merkmals über eine Eingabeeinheit der mobilen Transporteinheit oder über eine (drahtlos) mit der mobilen Transporteinheit MT verbundenen Bedieneinheit, beispielsweise ein Smartphone, gebeten. Alternativ ruft die mobile Transporteinheit MT die benötigten Authentifizierungsinformation der cloudbasierten Plattform CP ab.

### b) Erläutern des Fehlerfalls:

Die mobile Transporteinheit MT eine Ausgabeeinheit AE in Form eines Projektors auf, mithilfe welcher dem Bediener BN der Fehlerfall erläutert wird. Hierfür projiziert die mobile Transporteinheit MT den Namen des Fehlerfalls, eine Beschreibung des Fehlerfalls, sowie erste Hinweise zur Behebung des Fehlerfalls auf eine geeignete Fläche in der Anlage in der Nähe des Feldgeräts FG, beispielsweise auf eine Wand. Die Hinweise zur Behebung des Fehlerfalls erhält die mobile Transporteinheit MT von der cloudbasierten Plattform CP. Es kann hierfür vorgesehen sein, dass die mobile Transporteinheit MT zu diesem Zweck die in Beispiel a) abgerufenen Daten DA des Feldgeräts FG an die cloudbasierte Plattform CP übermittelt. Die cloudbasierte Plattform CP erstellt, beispielsweise mittels eines Kl-Algorithmus, auf Basis des Typs des Fehlerfalls oder der Daten des Feldgeräts FG die Hinweise zur Behebung des Fehlerfalls. Alternativ ist vorgesehen, dass die mobile Transporteinheit MT selbst über eine entsprechende Intelligenz verfügt, um die Hinweise zur Behebung des Fehlerfalls und/oder die Beschreibung des Fehlerfalls selbstständig zu erstellen.

Neben den genannten Informationen kann die mobile Transporteinheit MT mittels des Projektors AE Installationsinformationen und/oder Produktinformationen des Feldgeräts FG visualisieren, welche die mobile Transporteinheit MT insbesondere von der cloudbasierten Plattform CP abruft.

Es kann weiterhin vorgesehen sein, dass die Servicenotifikation, oder die Hinweise zur Behebung des Fehlerfalls, eine Angabe zu benötigten Hilfsmitteln, beispielsweise Werkzeug in Form eines Schraubendrehers HM, enthalten. Mittels der Kameraeinheit KA überprüft die mobile Transporteinheit MT, ob der Bediener BN das entsprechende Hilfsmittel HM mit sich führt. Ist das nicht der Fall, so navigiert die mobile Transporteinheit MT selbstständig zu einer definierten Ortsposition OP in der Anlage A,
beispielsweise zu einer Lagerstelle LS, holt das Werkzeug von dort ab und bringt es zurück zu dem Bediener BN.

Es kann vorgesehen sein, dass eine oder mehrerer solcher definierter Ortspositionen OP in der Anlage vorhanden ist. Zusätzlich oder alternativ zu einer Lagerstelle LS kann es sich um Orte handeln, an denen das Mobilfunknetz garantiert vorhanden ist. Im Falle, dass die mobile Transporteinheit MT an der Ortsposition des Feldgeräts FG das Mobilfunknetz nicht empfangen und keine Kommunikationsverbindung zu der cloudbasierte Plattform CP etablieren kann, navigiert die mobile Transporteinheit MT zu dieser Ortsposition OP, im Falle, dass Daten zu der cloudbasierten Plattform CP übermittelt oder von dieser empfangen werden müssen. Alternativ oder zusätzlich weist der Ort eine Lademöglichkeit für die mobile Transporteinheit MT auf, um deren elektrischen Energiespeicher aufzuladen.

### c) Assistieren mittels Sprachausgabe:

Die Bedienaktion zum Beheben des Fehlerfalls erfordert eine oder mehrere vorzunehmende Handlungen, bzw. Aktionen des Bedieners BN. Mittels einer Sprachausgabe über einen Lautsprecher AE" führt die mobile Transporteinheit MT den Bediener durch die verschiedenen vorzunehmenden Handlungen, bzw. Aktionen. Im vorliegenden Beispiel weist die mobile Transporteinheit MT den Bediener an, den Gehäusedeckel des Feldgeräts FG zu öffnen und das Feldgerät FG auszuschalten. Mittels eines Lasers AE' zeigt die mobile Transporteinheit MT auf für die vorzunehmende Handlung, bzw. Aktion relevante Stellen oder Komponenten, im vorliegenden Fall auf den Gehäusedeckel.

Es kann vorkommen, dass dem Bediener BN trotz Assistenz durch die mobile Transporteinheit bestimmte Aktionen, bzw. Handlungen, unklar sind. Zu diesem Zweck kann er der mobilen Transporteinheit MT Fragen stellen, bspw. über ein in der mobilen Transporteinheit MT eingebautes Mikrofon. Mittels eines Kl-Algorithmus, der in von der mobilen Transporteinheit MT oder der cloudbasierten Plattform ausgeführt wird, werden die Fragen analysiert, entsprechende Antworten generiert und die generierten Antworten über eine oder mehrere der Ausgabeeinheiten AE, AE', AE" ausgegeben.

### d) Überprüfen des korrekten Verwendens eines Hilfsmittels:

Es kann vorgesehen sein, dass die mobile Transporteinheit MT den Bediener BN während des Durchführens der Bedienaktion mittels der Kameraeinheit KA beobachtet.

Beispielsweise enthält die Servicenotifikation den Hinweis, dass zum Durchführen der Bedienaktion ein oder mehrere Hilfsmittel HM', HM" in Form von Sicherheitsmitteln zwingend vorgeschrieben sind. Im vorliegenden Fall handelt es sich um einen Schutzhelm HM' und um eine Sicherheitsbrille HM".

Die mobile Transporteinheit MT überprüft mittels der Kameraeinheit KA, ob der Bediener BN diese Sicherheitsmittel HM', HM" mit sich führt und holt diese analog zu Beispiel b) von der Lagerstelle LS ab, im Falle, dass der Bediener BN eines oder mehrere der Sicherheitsmittel HM', HM" nicht mit sich führt.

Weiterhin überprüft die mobile Transporteinheit MT mittels der Kameraeinheit KA, ob der Bediener die Sicherheitsmittel HM', HM" korrekt trägt, bzw. anwendet. Im vorliegenden Fall benutzt der Bediener BN den Schutzhelm HM' zwar korrekt, trägt jedoch die Sicherheitsbrille HM" nicht. Per Ausgabeeinheit AE, AE" macht die mobile Transporteinheit MT den Bediener BN darauf aufmerksam.

Die mobile Transporteinheit MT überprüft mittels der Kameraeinheit KA darüber hinaus, ob der Bediener BN die vorzunehmenden Handlungen, bzw. Aktionen korrekt durchführt und macht den Bediener BN gegebenenfalls mittels der Ausgabeeinheit AE, AE" darauf aufmerksam, dass bestimmte Handlungen, bzw. Aktionen nicht korrekt vorgenommen werden.

Es kann auch vorgesehen sein, dass die mobile Transporteinheit MT selbst Aktionen, bzw. Handlungen an dem Feldgerät FG vornimmt, insbesondere, wenn das Feldgerät FG nur schwer zugänglich ist. In diesem Fall muss sich die mobile Transporteinheit MT jede vorgenommene Handlung, bzw. Aktion von dem Bediener BN bestätigen lassen, um Fehler zu vermeiden.

Die in Fig. 1 und Fig. 2 beschriebenen Verfahrensschritte und Handlungen sind als beispielhaft zu verstehen. Das erfindungsgemäße Verfahren erlaubt eine Vielzahl weiterer Anwendungsfälle. Auch können das Feldgerät FG und die mobile Transporteinheit MT anders als beschrieben ausgestaltet sein, beispielsweise hinsichtlich des Typs des Feldgeräts FG und/oder hinsichtlich des Typs der verwendeten mobilen Transporteinheit MT.

### Bezugszeichenliste

- A: Anlage der Automatisierungstechnik
- AE, AE': Ausgabeeinheit
- AE": weitere Ausgabeeinheit
- BN: Bediener
- CP: cloudbasierte Plattform
- DA: Daten des Feldgeräts
- FG: Feldgerät
- HB: bewegliches Hindernis
- HM, HM', HM": Hilfsmittel
- HS, HS': stationäre Hindernisse
- IN: Inbetriebnahme-/Servicenotifikation
- KA: Kameraeinheit
- LS: Lagerstelle
- MT: Mobile Transporteinheit
- OP: definierte Ortsposition

## Patentansprüche

1. Verfahren zum Durchführen einer Inbetriebnahme eines Feldgeräts (FG) oder eines Serviceauftrags an dem Feldgerät (FG) in einer Anlage (A) der Automatisierungstechnik, wobei in der Anlage (A) eine mobile Transporteinheit (MT) eingesetzt wird, wobei die mobile Transporteinheit (MT) eine Positionsbestimmungseinheit aufweist und zur Navigation in der Anlage (A) ausgestaltet ist, **dadurch gekennzeichnet, dass** die mobile Transporteinheit (MT) zumindest eine Ausgabeeinheit (AE, AE') aufweist, das Verfahren umfassend:
- Übermitteln einer Inbetriebnahmenotifikation (IN) oder einer Servicenotifikation an die mobile Transporteinheit (MT), wobei die Inbetriebnahmenotifikation (IN), bzw. die Servicenotifikation die Identifikation des Feldgeräts (FG) und zumindest eine an dem Feldgerät (FG) vorzunehmende Bedienaktion enthält;
- Lokalisieren der Einbauposition des Feldgeräts (FG) in der Anlage (A) durch die mobile Transporteinheit (MT) anhand der Identifikation des betreffenden Feldgeräts (FG);
- Führen eines Bedieners (BN) zu der Einbauposition des Feldgeräts (FG) mittels autonomen Navigierens der mobilen Transporteinheit (MT) mithilfe der Positionsbestimmungseinheit durch die Anlage (A), wobei der Bediener (BN) der mobilen Transporteinheit (MT) folgt; und
- Assistieren des Bedieners (BN) beim Durchführen der Bedienaktion, wobei die mobile Transporteinheit (MT) dem Bediener (BN) alle zum erfolgreichen Durchführen der Bedienaktion auszuführenden Handlungen, bzw. Aktionen mittels der zumindest einen Ausgabeeinheit (AE, AE') vorgibt und/oder erläutert.

2. Verfahren nach Anspruch 1, wobei die mobile Transporteinheit (MT) im Zuge des Assistierens eine drahtlose erste Kommunikationsverbindung aufbaut und Daten (DA), insbesondere Parameter- oder Konfigurationseinstellungen, einen Gerätestatus oder Messwerte, über die erste Kommunikationsverbindung aus dem Feldgerät (FG) ausliest, wobei das Vorgeben und/oder Erläutern der auszuführenden Handlungen, bzw. Aktionen, an die ausgelesenen Daten (DA) angepasst wird.

3. Verfahren nach Anspruch 1 oder Anspruch 2, wobei die mobile Transporteinheit (MT) zumindest zeitweise in einer zweiten Kommunikationsverbindung über das Internet mit einer cloudbasierten Plattform (CP) steht, wobei die Inbetriebnahmenotifikation (IN), bzw. die Servicenotifikation, über die zweite Kommunikationsverbindung von der cloudbasierten Plattform (CP) an die mobile Transporteinheit (MT) übermittelt wird.

4. Verfahren nach Anspruch 3, wobei die mobile Transporteinheit(MT), im Falle, dass die zweite Kommunikationsverbindung an der aktuellen Ortsposition der mobilen Transporteinheit (MT) nicht etabliert werden kann, zu einer definierten Ortsposition (OP) in der Anlage (A) navigiert, an welcher definierten Ortsposition (OP) die zweite Kommunikationsverbindung etablierbar ist, wobei die mobile Transporteinheit (MT) die zweite Kommunikationsverbindung nach dem Navigieren an die definierte Ortsposition (OP) etabliert, und wobei die mobile Transporteinheit (MT) an die cloudbasierte Plattform (CP) zu übermittelnde Daten und/oder die von der cloudbasierten Plattform (CP) übermittelte Inbetriebnahmenotifikation (IN), bzw. Servicenotifikation, vor, bzw. nach dem Etablieren der Kommunikationsverbindung an der definierten Ortsposition (OP) zwischenspeichert.

5. Verfahren nach zumindest einem der vorherigen Ansprüche, wobei als Ausgabeeinheit (AE) ein Display oder ein Projektor verwendet wird, wobei für das Vorgeben und/oder Erläutern der auszuführenden Handlungen, bzw. Aktionen, Installationsinformationen und/oder Produktinformation des Feldgeräts (FG) visualisiert werden.

6. Verfahren nach zumindest einem der vorherigen Ansprüche, wobei als Ausgabeeinheit (AE') ein akustisches Wiedergabemittel, insbesondere ein Lautsprecher verwendet wird, wobei das Vorgeben und/oder Erläutern der auszuführenden Handlungen, bzw. Aktionen, mittels Sprachausgabe erfolgt.

7. Verfahren nach Anspruch 6, wobei die für die Sprachausgabe verwendete künstliche Stimme je nach Kritikalität der auszuführenden Handlung, bzw. Aktion variiert, insbesondere bezüglich der Lautstärke, der Stimmfarbe und/oder der Sprechgeschwindigkeit.

8. Verfahren nach Anspruch 4, wobei der Bediener (BN) im Zuge des Assistierens Fragen an die mobile Transporteinheit (MT) bezüglich der auszuführenden Handlungen, bzw. Aktionen stellt und wobei die mobile Transporteinheit (MT) dem Bediener (BN) mittels der Ausgabeeinheit (AE, AE') abhängig von den Fragen weitere Informationen bezüglich der auszuführenden Handlungen, bzw. Aktionen ausgibt.

9. Verfahren nach Anspruch 8, wobei die mobile Transporteinheit (MT) eine Eingabeeinheit, insbesondere eine Mikrofoneinheit, zum Eingeben der Fragen aufweist, wobei die mobile Transporteinheit (MT) die Fragen mittels eine Kl-Algorithmus oder mittels zusätzlichen, insbesondere von dem Feldgerät (FG) und/oder von der cloudbasierten Plattform (CP) abgefragten, Daten analysiert, und wobei die mobile Transporteinheit (MT) mittels des KI-Algorithmus, bzw. der zusätzlichen Daten die weiteren Informationen erstellt.

10. Verfahren nach Anspruch 9, wobei die mobile Transporteinheit (MT) eine Eingabeeinheit, insbesondere eine Mikrofoneinheit, zum Eingeben der Fragen aufweist, und wobei die mobile Transporteinheit (MT) die Fragen mittels der zweiten Kommunikationsverbindung an die cloudbasierte Plattform (CP) übermittelt, wobei die cloudbasierte Plattform (CP) die Fragen mittels eines Kl-Algorithmus oder zusätzlichen, insbesondere auf der cloudbasierten Plattform (CP) gespeicherten und/oder von dem Feldgerät (FG) abgefragten, Daten analysiert, wobei die cloudbasierte Plattform (CP) mittels des Kl-Algorithmus, bzw. der zusätzlichen Daten die weiteren Informationen erstellt, und wobei die cloudbasierte Plattform (CP) die weiteren Informationen über die zweite Kommunikationsverbindung an die mobile Transporteinheit (MT) übermittelt.

11. Verfahren nach zumindest einem der vorherigen Ansprüche, wobei die Inbetriebnahmenotifikation (IN), bzw. die Servicenotifikation, eine Information über zumindest ein für das Ausführen der Handlungen und/oder Aktionen benötigtes Hilfsmittel (HM, HM', HM"), insbesondere ein Werkzeug, ein Ersatzteil oder ein Sicherheitsmittel, enthält.

12. Mobile Transporteinheit (MT) ausgestaltet zur Verwendung in einem Verfahren nach zumindest einem der Ansprüche 1 bis 11.

13. Mobile Transporteinheit (MT) nach Anspruch 12, wobei die mobile Transporteinheit (MT) eine flugfähige Drohne, insbesondere eine Rotationsdrohne, oder ein Fahrerloses Transportfahrzeug ist.

## Claims

1. Method for carrying out commissioning of a field device (FG) or a service order on the field device (FG) in an automation system (A), a mobile transport unit (MT) being used in the system (A), the mobile transport unit (MT) having a position determination unit and being designed for navigation in the system (A), **characterized in that** the mobile transport unit (MT) has at least one output unit (AE, AE'), the method comprising:
- Transmission of a commissioning notification (IN) or a service notification to the mobile transport unit (MT), wherein the commissioning notification (IN) or the service notification contains the identification of the field device (FG) and at least one operating action to be performed on the field device (FG);
- Localization of the installation position of the field device (FG) in the system (A) by the mobile transport unit (MT) using the identification of the relevant field device (FG);
- guiding an operator (BN) to the installation position of the field device (FG) by autonomously navigating the mobile transport unit (MT) through the installation (A) using the positioning unit, wherein the operator (BN) follows the mobile transport unit (MT); and
- Assisting the operator (BN) in carrying out the operating action, the mobile transport unit (MT) specifying and/or explaining to the operator (BN) all the actions to be carried out in order to successfully carry out the operating action by means of the at least one output unit (AE, AE').

2. Method according to claim 1, wherein the mobile transport unit (MT) establishes a wireless first communication link in the course of assisting and reads out data (DA), in particular parameter or configuration settings, a device status or measured values, from the field device (FG) via the first communication link, wherein the specification and/or explanation of the actions to be carried out is adapted to the read-out data (DA).

3. Method according to claim 1 or claim 2, wherein the mobile transport unit (MT) is at least temporarily in a second communication connection via the Internet with a cloud-based platform (CP), wherein the commissioning notification (IN), or the service notification, is transmitted from the cloud-based platform (CP) to the mobile transport unit (MT) via the second communication connection.

4. Method according to claim 3, wherein the mobile transport unit (MT), in the event that the second communication connection cannot be established at the current location position of the mobile transport unit (MT), navigates to a defined location position (OP) in the installation (A), at which defined location position (OP) the second communication connection can be established, wherein the mobile transport unit (MT) establishes the second communication link after navigating to the defined local position (OP), and wherein the mobile transport unit (MT) transmits data to be transmitted to the cloud-based platform (CP) and/or the commissioning notification (IN) or service notification transmitted by the cloud-based platform (CP) before, during and after the navigation. service notification, before or after establishing the communication connection at the defined location position (OP).

5. Method according to at least one of the preceding claims, wherein a display or a projector is used as output unit (AE), wherein installation information and/or product information of the field device (FG) are visualized for specifying and/or explaining the actions to be performed.

6. Method according to at least one of the preceding claims, wherein an acoustic reproduction means, in particular a loudspeaker, is used as output unit (AE'), wherein the actions or actions to be carried out are specified and/or explained by means of voice output.

7. The method according to claim 6, wherein the artificial voice used for the voice output varies according to the criticality of the action to be performed, in particular with respect to the volume, the voice color and/or the speaking rate.

8. Method according to claim 4, wherein the operator (BN) asks questions to the mobile transport unit (MT) regarding the actions to be carried out in the course of assisting and wherein the mobile transport unit (MT) outputs further information regarding the actions to be carried out to the operator (BN) by means of the output unit (AE, AE') depending on the questions.

9. Method according to claim 8, wherein the mobile transport unit (MT) has an input unit, in particular a microphone unit, for inputting the questions, wherein the mobile transport unit (MT) analyzes the questions by means of an Al algorithm or by means of additional data, in particular data queried from the field device (FG) and/or from the cloud-based platform (CP) , and wherein the mobile transport unit (MT) creates the further information by means of the Al algorithm or the additional data.

10. Method according to claim 9, wherein the mobile transport unit (MT) has an input unit, in particular a microphone unit, for inputting the questions, and wherein the mobile transport unit (MT) transmits the questions to the cloud-based platform (CP) by means of the second communication link, wherein the cloud-based platform (CP) analyzes the questions by means of an Al algorithm or additional data, in particular data stored on the cloud-based platform (CP) and/or queried by the field device (FG), wherein the cloud-based platform (CP) creates the further information by means of the Al algorithm or the additional data, and wherein the cloud-based platform (CP) transmits the further information to the mobile transport unit (MT) via the second communication link. the additional data, and wherein the cloud-based platform (CP) transmits the additional information to the mobile transport unit (MT) via the second communication link.

11. Method according to at least one of the preceding claims, wherein the commissioning notification (IN), or the service notification, contains information about at least one auxiliary means (HM, HM', HM"), in particular a tool, a spare part or a safety means, required for carrying out the actions and/or actions.

12. Mobile transport unit (MT) designed for use in a method according to at least one of claims 1 to 11.

13. Mobile transport unit (MT) according to claim 12, wherein the mobile transport unit (MT) is an airworthy drone, in particular a rotary drone, or a driverless transport vehicle.

## Revendications

1. Procédé pour effectuer une mise en service d'un appareil de terrain (FG) ou un ordre de service sur l'appareil de terrain (FG) dans une installation (A) de la technique d'automatisation, une unité de transport mobile (MT) étant utilisée dans l'installation (A), l'unité de transport mobile (MT) présentant une unité de détermination de position et étant conçue pour la navigation dans l'installation (A), **caractérisé en ce que** l'unité de transport mobile (MT) présente au moins une unité de sortie (AE, AE'), le procédé comprenant :
- transmettre une notification de mise en service (IN) ou une notification de service à l'unité de transport mobile (MT), la notification de mise en service (IN) ou la notification de service contenant l'identification de l'appareil de terrain (FG) et au moins une action de commande à effectuer sur l'appareil de terrain (FG) ;
- localisation de la position de montage de l'appareil de terrain (FG) dans l'installation (A) par l'unité de transport mobile (MT) à l'aide de l'identification de l'appareil de terrain (FG) concerné ;
- guider un opérateur (BN) vers la position d'installation de l'appareil de terrain (FG) en faisant naviguer de manière autonome l'unité de transport mobile (MT) à travers l'installation (A) au moyen de l'unité de détermination de position, l'opérateur (BN) suivant l'unité de transport mobile (MT) ; et
- assister l'opérateur (BN) lors de l'exécution de l'action de service, l'unité de transport mobile (MT) prescrivant et/ou expliquant à l'opérateur (BN), au moyen de l'au moins une unité de sortie (AE, AE'), toutes les actions à exécuter pour exécuter avec succès l'action de service.

2. Procédé selon la revendication 1, dans lequel l'unité de transport mobile (MT) établit une première liaison de communication sans fil au cours de l'assistance et lit des données (DA), en particulier des réglages de paramètres ou de configuration, un état d'appareil ou des valeurs de mesure, à partir de l'appareil de terrain (FG) par l'intermédiaire de la première liaison de communication, la prescription et/ou l'explication des actions à exécuter, ou des actions, étant adaptées aux données (DA) lues.

3. Procédé selon la revendication 1 ou la revendication 2, dans lequel l'unité de transport mobile (MT) est au moins temporairement dans une deuxième liaison de communication via l'Internet avec une plate-forme basée dans le nuage (CP), dans lequel la notification de mise en service (IN), ou la notification de service, est transmise par la plate-forme basée dans le nuage (CP) à l'unité de transport mobile (MT) via la deuxième liaison de communication.

4. Procédé selon la revendication 3, dans lequel l'unité de transport mobile (MT), dans le cas où la deuxième liaison de communication ne peut pas être établie à la position locale actuelle de l'unité de transport mobile (MT), navigue vers une position locale définie (OP) dans l'installation (A), à laquelle position locale définie (OP) la deuxième liaison de communication peut être établie, dans lequel l'unité de transport mobile (MT) établit la deuxième liaison de communication après la navigation à la position locale définie (OP), et dans lequel l'unité de transport mobile (MT) transmet des données à transmettre à la plate-forme basée sur le cloud (CP) et/ou l'information de mise en service (IN), respectivement l'information de service, transmise par la plate-forme basée sur le cloud (CP). (IN), avant ou après l'établissement de la liaison de communication, à la position locale définie (OP).

5. Procédé selon au moins l'une des revendications précédentes, dans lequel un écran ou un projecteur est utilisé comme unité de sortie (AE), des informations d'installation et/ou des informations sur le produit de l'appareil de terrain (FG) étant visualisées pour la prescription et/ou l'explication des actions, ou des actions, à exécuter.

6. Procédé selon au moins l'une des revendications précédentes, dans lequel on utilise comme unité de sortie (AE') un moyen de reproduction acoustique, en particulier un haut-parleur, la prescription et/ou l'explication des actions, ou des actions, à exécuter se faisant au moyen d'une sortie vocale.

7. Procédé selon la revendication 6, dans lequel la voix artificielle utilisée pour la synthèse vocale varie en fonction de la criticité de l'action à effectuer, notamment en ce qui concerne le volume, la couleur de la voix et/ou la vitesse d'élocution.

8. Procédé selon la revendication 4, dans lequel l'opérateur (BN) pose, au cours de l'assistance, des questions à l'unité de transport mobile (MT) concernant les manipulations ou les actions à effectuer et dans lequel l'unité de transport mobile (MT) délivre à l'opérateur (BN), au moyen de l'unité de sortie (AE, AE'), en fonction des questions, d'autres informations concernant les manipulations ou les actions à effectuer.

9. Procédé selon la revendication 8, dans lequel l'unité de transport mobile (MT) présente une unité d'entrée, en particulier une unité de microphone, pour entrer les questions, dans lequel l'unité de transport mobile (MT) analyse les questions au moyen d'un algorithme d'intelligence artificielle ou au moyen de données supplémentaires, en particulier interrogées par l'appareil de terrain (FG) et/ou par la plate-forme basée sur le cloud (CP) , et dans lequel l'unité de transport mobile (MT) établit les autres informations au moyen de l'algorithme d'intelligence artificielle ou des données supplémentaires.

10. Procédé selon la revendication 9, dans lequel l'unité de transport mobile (MT) présente une unité d'entrée, en particulier une unité de microphone, pour entrer les questions, et dans lequel l'unité de transport mobile (MT) transmet les questions à la plateforme basée sur le nuage (CP) au moyen de la deuxième liaison de communication, dans lequel la plateforme basée sur le nuage (CP) analyse les questions au moyen d'un algorithme d'intelligence artificielle ou de données supplémentaires, en particulier stockées sur la plateforme basée sur le nuage (CP) et/ou interrogées par l'appareil de terrain (FG), dans lequel la plateforme basée sur le nuage (CP) crée des informations supplémentaires au moyen de l'algorithme d'intelligence artificielle, respectivement des données supplémentaires. des données supplémentaires, et la plate-forme basée sur le nuage (CP) transmettant les informations supplémentaires à l'unité de transport mobile (MT) par l'intermédiaire de la deuxième liaison de communication.

11. Procédé selon au moins l'une des revendications précédentes, dans lequel l'information de mise en service (IN), ou l'information de service, contient une information sur au moins un moyen auxiliaire (HM, HM', HM"), notamment un outil, une pièce de rechange ou un moyen de sécurité, nécessaire à l'exécution des manipulations et/ou des actions.

12. Unité de transport mobile (MT) conçue pour être utilisée dans un procédé selon au moins l'une des revendications 1 à 11.

13. Unité de transport mobile (MT) selon la revendication 12, dans laquelle l'unité de transport mobile (MT) est un drone capable de voler, en particulier un drone rotatif, ou un véhicule de transport sans conducteur.
